**Europäisches Patentamt**

**European Patent Office**

**Office européen des brevets**

(19)

(11) Veröffentlichungsnummer: **0 051 135**

**A1**

(12) **EUROPÄISCHE PATENTANMELDUNG**

(21) Anmeldenummer: **81107124.0**

(22) Anmeldetag: **10.09.81**

(51) Int. Cl.³: **B 23 K 11/36**
**H 01 H 33/00**

(30) Priorität: **31.10.80 CH 8110/80**

(43) Veröffentlichungstag der Anmeldung:
**12.05.82 Patentblatt 82/19**

(84) Benannte Vertragsstaaten:
**CH DE FR GB IT LI NL SE**

(71) Anmelder: **H.A. SCHLATTER AG**
**Brandstrasse 24**
**CH-8952 Schlieren(CH)**

(72) Erfinder: **Knobloch, Johannes Friedrich, Dipl.-Ing.**
**Gheidstrasse 135**
**CH-8105 Watt(CH)**

(72) Erfinder: **Brunner, Ernst, Ing.HTL**
**Haldenstrasse 41**
**CH-8967 Widen(CH)**

(74) Vertreter: **Keller, René, Dr. et al,**
**Patentanwälte Hartmut Keller, Dr. René Keller Postfach 12**
**CH-3000 Bern 7(CH)**

(54) **Verfahren und Vorrichtung zum Mehrstellenwiderstandsschweissen.**

(57) Mehrere Elektroden (6) sind elektrisch isoliert an einer gemeinsamen Kraftübertragungsplatte (5) angebracht. Jeder Elektrode (6) ist ein Trennschalter (30) zugeordnet, durch den sie galvanisch mit der Platte (5) verbindbar ist. Die Platte (5) und eine zweite Kraftübertragungsplatte (10), welche die Gegenelektroden (11) trägt, sind an die Pole einer einzigen Schweissstromquelle angeschlossen. Die Werkstücke werden zwischen sämtliche Elektroden (6) und Gegenelektroden (11) eingespannt. Darauf werden vorgewählte Gruppen der Elektroden (6) nacheinander mit dem Schweissstrom gespeist.

Mit der Vorrichtung können auf kleinem Raum sehr viele, nahe beieinander liegende Stellen geschweisst werden, während die Werkstücke gegen Verformung gesichert zwischen sämtlichen Elektroden und Gegenelektroden eingespannt sind.

Fig. 3

EP 0 051 135 A1

Croydon Printing Company Ltd.

Verfahren und Vorrichtung zum Mehrstellenwiderstandsschweissen

---

Die Erfindungen betreffen ein Verfahren und eine Vorrichtung zum Mehrstellenwiderstandsschweissen gemäss den Oberbegriffen der Patentansprüche 1 und 4.

Mehrstellenwiderstandsschweissvorrichtungen mit einer
Vielzahl von Elektroden sind zwar schon seit langem bekannt. Trotzdem hat man bisher Werkstücke, zum Beispiel
solche für Autotüren,bei denen eine grosse Anzahl verhältnismässig nahe beieinander liegender Schweissstellen
zu schweissen waren, nicht auf einer sondern auf mehreren,
entlang einer Schweissstrasse angeordneten Mehrstellenschweissmaschinen geschweisst. Bisher hielt man nämlich
das Schweissen sehr vieler, nahe benachbarter Stellen
auf einer einzigen Maschine schon aus konstruktiven Gründen für unmöglich, weil jedem Elektrodenpaar ein Schweisstransformator zugeordnet war, der erheblichen Platz beanspruchte. Der Transport der Werkstücke auf der Schweissstrasse und das Positionieren und Schweissen auf verschiedenen Maschinen war nicht nur mühsam und aufwendig, es bestand zudem einerseits die Gefahr, dass sich die Werkstücke bei den einzelnen Schweissungen und dem anschliessenden Transport verzogen und andererseits, dass die Schweissungen nicht genau an den vorgesehenen Stellen erfolgten.

Den Erfindungen liegt die Aufgabe zugrunde, an einem einzigen Arbeitsort eine grosse Anzahl Schweissverbindungen nahe
beieinander, präzise durchzuführen und dabei Verformungen
der Werkstücke zu vermeiden. Dazu sollen Verfahren und Vorrichtung einfach sein und auch an einem nur wenig belastbaren Netz betrieben werden können.

Die erfindungsgemässen Lösungen dieser Aufgabe sind Gegenstand der Ansprüche 1 und 4. Bevorzugte Ausführungsformen
sind in den Ansprüchen 2 und 3 sowie 5 bis 15 umschrieben.

Erfindungsgemäss werden die einzelnen Elektroden oder Elektrodengruppen nacheinander in denselben Schweissstromkreis geschaltet. Dies bedeutet, dass sämtliche, nacheinander beaufschlagte Elektroden bzw. Elektrodengruppen von derselben
Schweissstromquelle, z.B. einer Transformatorengruppe, gespeist werden. Die Stromstärke und die Dauer bzw. die Impulsfolge des Schweissstroms kann dabei von Schweissung zu Schweissung durch entsprechende, z.B. programmgesteuerte Schaltung
der Stromquelle variiert werden. Soll die Stromdichte in
den Schweissstellen bei allen Schweissungen konstant gehalten
werden, so muss man in der Regel die Spannung der Stromquelle
von Schweissung zu Schweissung anders einstellen, weil der
Widerstand der Schweissstellen variieren kann, (z.B. infolge
verschieden dicker Werkstückteile), und weil die zuvor geschweissten Stellen Nebenschlüsse bilden.

Im folgenden wird anhand der beiliegenden Zeichnung ein Ausführungsbeispiel der Erfindung näher beschrieben. Es zeigen:

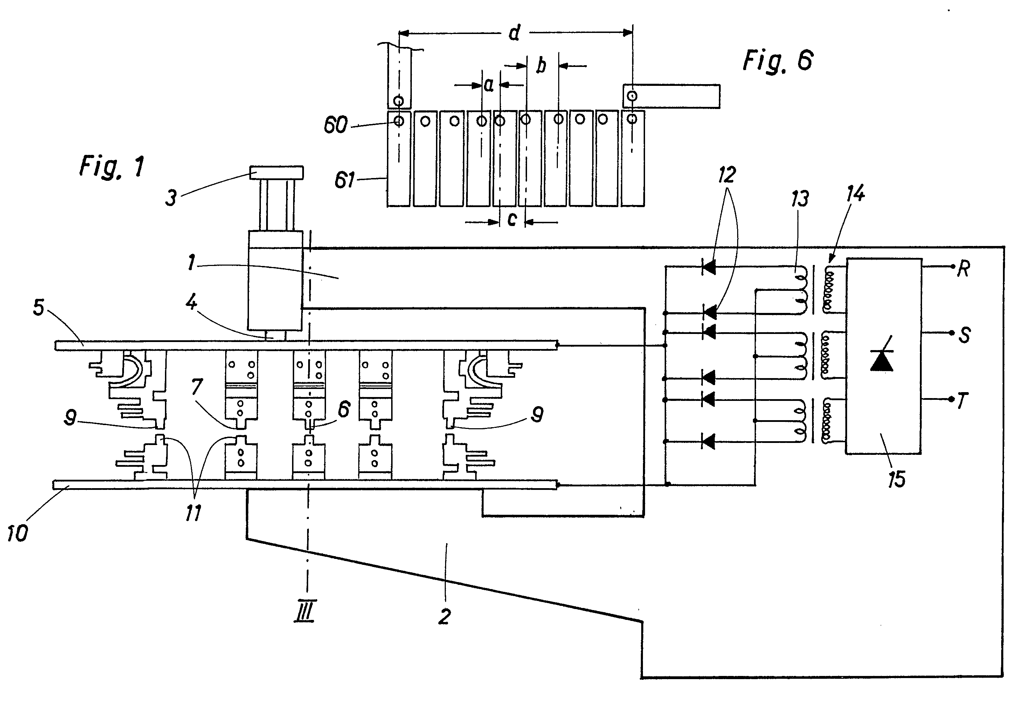

Fig. 1  eine schematische Seitenansicht einer erfindungsgemässen Widerstandsschweissvorrichtung,

Fig. 2  eine schematische Untersicht der je einen Schalter
        enthaltenden Elektrodeneinheiten mit zwei strichpunktiert angedeuteten, zu verschweissenden Werkstücken,

Fig. 3  einen vertikalen Schnitt durch eine der Elektrodeneinheiten und die Gegenelektrodeneinheit, nach der
        Linie III in Fig. 1 und in grösserem Massstab, ohne
        die Schweissmaschinenarme,

Fig. 4  eine Seitenansicht in Blickrichtung des Pfeiles IV

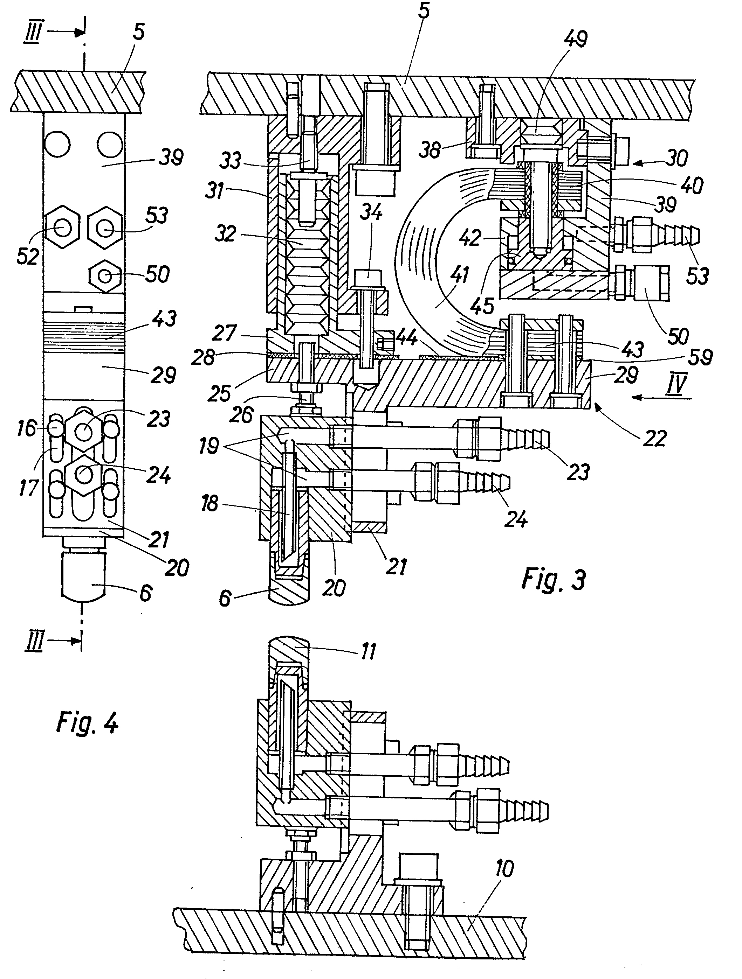

        in Fig. 3,

Fig. 5  den Schalter von Fig. 3 in grösserem Massstab und

Fig. 6  eine schematische Darstellung sehr nahe beieinander·
        angeordneter Elektrodeneinheiten.

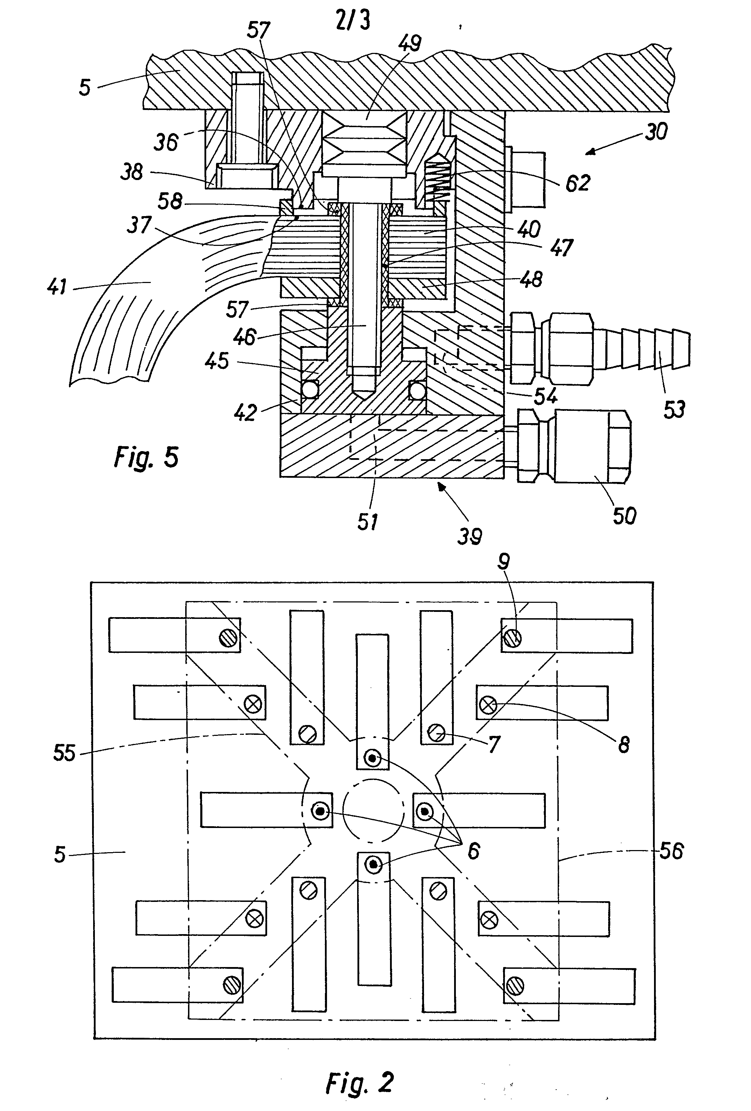

Die dargestellte, zum Buckel- oder Punktschweissen dienende Widerstandsschweissvorrichtung hat einen Ober- und einen
Unterarm 1 und 2. Der Oberarm 1 trägt eine pneumatisch betätigbare Kolben-Zylinder-Einheit 3, an deren Kolbenstange
4 eine Kraftübertragungsplatte 5 befestigt ist. An dieser
sind insgesamt sechzehn, je eine elektrisch isolierte Elektrode und einen Schalter aufweisende Elektrodeneinheiten in
der in Fig. 2 gezeigten Anordnung angebracht. Beim weiter
unten beschriebenen Verfahrensbeispiel wird jeweils eine
Gruppe von vier Elektroden gleichzeitig mit dem Schweissstrom gespeist. Die Elektroden der nacheinander mit dem
Schweissstrom gespeisten Elektrodengruppen sind in Fig. 2 mit
6, 7, 8 und 9 bezeichnet. Dabei sind die Elektroden derselben
Gruppe jeweils mit demselben, von den übrigen Gruppen verschiedenen Symbol gekennzeichnet. Der Unterarm 2 trägt eine zweite Kraftübertragungsplatte 10, auf der für jede Elektrode eine Gegenelektrodeneinheit, montiert ist, deren Gegenelektrode elektrisch leitend mit der Platte verbunden ist. Die beiden, elektrisch leitenden Kraftübertragungsplatten 5 und 10 sind mit den Klemmen eines aus sechs Hochstromdioden 12 bestehenden Sechsphasengleichrichters verbunden. Dieser ist an die drei Sekundärwicklungen 13 einer Transformatorengruppe 14 angeschlossen, die primärseitig über eine Thyristor-Schaltvorrichtung 15 an das Drehstromnetz R, S, T angeschlossen ist.

Die Elektrodeneinheiten der Elektrodengruppen 6 - 9 sind alle gleich aufgebaut und in gleicher Weise an der Platte 5 angebracht. Fig. 3 und 4 zeigen als Beispiel die Anordnung einer der Elektrodeneinheiten sowie der Gegenelektrodeneinheit, die ebenfalls genau den übrigen, mit ihr an der Platte 10 angebrachten Gegenelektroden entspricht. Die Elektrode 6 und ein Kühlrohr 18 sitzen in einem mit Kühlkanälen 19 versehenen Elektrodenhalter 20. Dieser ist an den Steg 21 eines T-Verbindungsstücks 22 geschraubt, wobei den Schrauben 16 Langlöcher 17 im Steg 21 zugeordnet sind, damit der Elektrodenhalter in der Höhe verstellt werden kann. Die Anschlussstücke 23, 24 für die Kühlwasserleitungen sind aus demselben Grunde durch ein weiteres Langloch des Stegs 21 geführt und in den Halter 20 geschraubt. Der Kopf einer in den in Fig. 3 linken Flansch 25 des T-Verbindungsstücks 22 geschraubten Einstellschraube 26 dient als einstellbarer Anschlag für die Positionierung des Halters 20 bei dessen Befestigung am Steg 21. Zwischen dem Flansch 25 und einem fest mit ihm verbundenen Führungsteil 27 liegt eine Isolierplatte 28, so dass der Schweissstrom nur durch den anderen Flansch 29 des Verbindungsstücks 22, der über den weiter unten näher beschriebenen Trennschalter 30 elektrisch mit der Platte 5 verbindbar ist, zur Elektrode 6 gelangen kann. Der mit einer Bohrung versehene Führungsteil 27 ist in einer an der Platte 5 befestigten Führung 31 vertikal gegen die Kraft einer in der Bohrung sitzenden Druckfeder (Tellerfeder) 32 verschiebbar, die
an einem zur Einstellung der Federspannung dienenden
Schraubenbolzen 33 abgestützt ist. Der Kopf 34 einer
durch eine Bohrung eines seitlichen Vorsprungs der Führung 31 geführten und in den Führungsteil 27 geschraubten Schraube hält den Führungsteil 27 in der dargestellten Ruhelage gegen die Kraft der Feder 32 in der Führung
31. Die Schraube 34 dient zudem noch zur Feineinstellung
der Elektrodenhöhe. Die Feineinstellung erfolgt nach dem
Einbau der Elektrode 6 in den fest mit dem Steg 21 verschraubten Halter 20, wobei die Gegenelektrode 11 entsprechend nachgestellt wird.

Der in Fig. 5 in grösserem Massstab als in Fig. 4 dargestellte Trennschalter 30 hat zwei in der gezeigten Ausschaltstellung durch einen Luftspalt getrennte Kontaktflächen 36, 37. Die Kontaktfläche 36 ist an der Unterseite eines an der Platte 5 befestigten Schenkels 38
eines mehrteiligen, U-förmigen Halters 39 gebildet. Die
Kontaktfläche 37 ist an der Oberseite eines Endes 40
eines sogenannten Strombands 41, d.h. eines aus mehreren
Kupferbändern bestehenden, biegsamen Stromleiters, gebildet. Das Stromband 41 verläuft U-förmig um den anderen
Schenkel 42 des Halters 39 und ist mit seinem anderen
Ende 43 leitend mit dem Flansch 29 verbunden, der in dem
Bereich, wo das Stromband 41 nur lose an ihm anliegt,
zur Vermeidung von Funkenüberschlägen mit einem Isoliermaterial 44 überzogen ist. Der Schenkel 42 des Halters 39
bildet (oder trägt) den Zylinder einer hydraulisch betätigbaren Kolben-Zylinder-Einheit, in deren Kolben 45 eine
Schraube 46 geschraubt ist. Die Schraube 46 ist mit einer
auf ihr sitzenden Isolierhülse 47 durch das Strombandende
40 hindurchgeführt. Auf den Enden der Isolierhülse 47
sitzen Isolierscheiben 57, deren eine am Kopf der Schraube 46 und deren andere an der Oberseite des Kolbens 45 abgestützt ist und die das Ende 40 des Strombands 41 und
ein Zwischenstück 48 einklemmen. Der Kopf der Schraube
46 stösst gegen eine in einer Bohrung des Schenkels 38
angeordnete Druckfeder (Tellerfeder) 49, welche an der
Platte 5 abgestützt ist. Die Hydraulikflüssigkeit für
die Kolben-Zylinder-Einheit 42, 45 wird über den Anschluss 50 und den Kanal 51 zugeführt. Die Hydraulik
ermöglicht die Erzeugung hoher Kräfte. Diese sind notwendig, damit die Kontaktflächen 36 und 37 so fest aneinander gepresst werden, dass ein einwandfreier Durchgang der hohen Schweissströme gewährleistet ist. Mit
52 und 53 (Fig. 4) sind zwei Kühlwasser-Anschlüsse bezeichnet, welche in einen im Schenkel 42 vorgesehenen
Kühlkanal 54 münden. Weil der Schenkel 42 leitend mit der
Kontaktfläche 36 verbunden ist, wird die beim Stromdurchgang am Kontaktwiderstand 36, 37 entstehende Wärme abgeführt. Zur Erhöhung der Wärmeübertragung kann der Kühlkanal 54 auch durch den Steg des Halters 39 und den
Schenkel 38 geführt sein. Wie Fig. 5 zeigt, schützt ein am
unteren Teil des Schenkels 38 gelagerter und durch Federn
62 auf das Strombandende 40 gedrückter Kunststoffring 58
die Kontaktflächen 36 und 37 vor Verunreinigung durch
Schweissspritzer oder Staub. Zum selben Zweck könnte auch
ein Schutzbalgen vorgesehen sein.

Die in Fig. 2 gezeigte Anordnung der Elektrodengruppen
6 - 9 eignet sich beispielsweise zum Verschweissen der
beiden strichpunktiert angedeuteten Werkstücke 55 und 56,
von denen das erste kreuzförmig und das zweite quadratisch ist. Die insgesamt sechzehn für die Mehrstellenschweissung erforderlichen Elektroden 6 - 9 sind mit
ihren im Umriss je durch ein Rechteck angedeuteten, die
Teile 20 bis 53 umfassenden Einheiten entsprechend der
erforderlichen Schweissstellenanordnung an der Kraftübertragungsplatte 5 angebracht.

Nachdem die beiden Werkstücke 55 und 56 in die richtige
Lage zwischen den Elektroden 6 - 9 und Gegenelektroden 11
gebracht sind, wird die Kolben-Zylinder-Einheit 3 beaufschlagt, wodurch die Werkstücke 55 und 56 zwischen sämtlichen Elektroden 6 - 9 und Gegenelektroden 11 eingespannt werden. Die Einheit 3 erzeugt dabei die für die
gleichzeitige Beaufschlagung sämtlicher Elektroden erforderliche Druckkraft (d.i. die Summe der erforderlichen
Einzelelektrodenkräfte). Diese kann zum Beispiel im Bereich
von 500 - 5000 N liegen. Darauf werden zuerst die vier
Elektroden der innersten Elektrodengruppe 6 durch hydraulische Beaufschlagung der Kolben 45 ihrer Schalter 30
galvanisch mit der Platte 5 verbunden. Die Schalter aller
anderen Elektrodengruppen 7 - 9 bleiben in der Ruhelage
(der Ausschaltstellung), so dass die Elektroden dieser
Gruppen 7 - 9 von der Platte 5 isoliert sind. Nachdem
die Elektroden 6 mit der Platte 5 verbunden und somit je
in Reihe mit ihrer Gegenelektrode 11 parallel geschaltet
sind, wird der Schweissstrom mittels der Schaltvorrichtung 15 eingeschaltet. (Er kann zum Beispiel bis 22 kA
betragen.) Nach dem Ausschalten des Schweissstromes werden die Schalter 30 der Elektrodengruppe 6 durch Entlasten ihrer Kolben 45 geöffnet und diejenigen der Elektrodengruppe 7 durch Beaufschlagen deren Kolben 45 geschlossen. Darauf werden beim Wiedereinschalten des
Schweissstromes lediglich die Elektroden 7 mit dem
Schweissstrom gespeist. In derselben Weise werden anschliessend die Elektroden der Gruppe 8 und dann die der
Gruppe 9 mit dem Schweissstrom gespeist. Nach der für das
Abkühlen der Schweissstellen erforderlichen Zeit wird
durch entsprechende Beaufschlagung der Kolben-Zylinder-
Einheit 3 die Platte 5 mit den Elektroden aller Gruppen
6 - 9 in die Ausgangslage gehoben, so dass die an sechzehn Stellen geschweissten Werkstücke 55, 56 aus der Schweissvorrichtung genommen werden können.

Wie bereits einleitend erwähnt kann die Stromstärke und die Stromzeit mittels einer (nicht dargestellten), an Stelle der Schaltvorrichtung 15 vorgesehenen Programmsteuervorrichtung von Elektrodengruppe zu Elektrodengruppe variiert werden, wobei der Schweissstrom jeweils auch kurzzeitig unterbrochen, die Schweissung also in kurzen Impulsen durchgeführt werden kann. Die Stromstärke kann ausserdem nicht nur von Elektrodengruppe zu Elektrodengruppe sondern auch von Elektrode zu Elektrode einer Gruppe verschieden gewählt werden. Um dies zu erreichen können Widerstandsscheiben aus einer Legierung der Markenbezeichnung Konstantan mit entsprechend gewählten Widerstandswerten zwischen die Kraftübertragungsplatte 5 und den Schenkel 38 oder zwischen den Flansch 29 und das Strombandende 43 der einzelnen, parallel geschalteten Elektrodeneinheiten eingefügt werden. In Fig. 3 ist eine solche Widerstandsscheibe 59 aus Konstantan zwischen das Strombandende 43 und den Flansch 29 eingefügt.

Die beschriebenen, je eine Elektrode und einen Trennschalter umfassenden Elektrodeneinheiten sind sehr klein ausgeführt, so dass die Elektroden in Abständen von wenigen Zentimetern voneinander angeordnet werden können. Ein Beispiel einer solchen eng zusammengedrängten Anordnung von Elektrodeneinheiten zeigt Fig. 6. Die je eine Elektrode 60 und die zugehörigen Teile 20 bis 53 umfassenden Elektrodeneinheiten 61 sind durch ihren rechteckigen Umriss dargestellt. Neun Elektrodeneinheiten 61 sind in Abständen von 2 mm in einer Reihe nebeneinander angeordnet, zwei weitere sind stirnseitig bzw. unter einem rechten Winkel zu den beiden äusseren Elektrodeneinheiten der Reihe angeordnet. Alle Elektroden 60
könnten die Form der Elektroden 6 haben; ihr Achsabstand wäre dann 42 mm. Die Elektroden können aber -
wenn dies die Schweissstellenanordnung erfordert -
noch näher beieinander angeordnet werden, indem eine
gekröpfte Form gewählt wird, so dass die Elektrodenspitze seitlich gegen die Achse des Kühlrohrs 18 versetzt ist. Dies ist bei einigen der Elektrodeneinheiten
60 der Fall. Damit wird ein minimaler Abstand der Elektrodenspitzen von a = 30 mm erreicht. Die beiden anderen eingezeichneten Abstände sind b = 54 mm und c =
42 mm. Der Abstand der beiden äussersten der neun aneinandergereihten Elektroden 60 beträgt d = 37, 8 cm.

Die Kräfte, mit denen die einzelnen Elektroden mit ihren
Gegenelektroden die Werstückteile an der Schweissstelle
zusammenpressen, hängen nicht nur von der Kraft der
Kolben-Zylinder-Einheit 3, sondern auch von den Spannungen bzw. Kräften der Druckfedern 32 ab. Durch Verstellen der Schraubenbolzen 33 lassen sich deshalb die einzelnen Elektrodenkräfte individuell aufeinander abstimmen, was vor allem dann von Bedeutung ist, wenn die
Schweissstellen unterschiedlich beschaffen, zum Beispiel die Werkstücke verschieden dicke Teile aufweisen.
Wie oben erläutert, kann mit der Schraube 34 noch eine
Feineinstellung vorgenommen werden.

Weil die Elektroden gruppenweise nacheinander mit dem
Schweissstrom gespeist werden, richtet sich die Belastung des Netzes und der Transformatorengruppe nicht
nach der Gesamtzahl sondern nur nach der Anzahl der
Elektroden in einer Gruppe. Man kann deshalb die Elektroden bei nur wenig belastbarem Netz (bzw. Transformatorengruppe) in sehr viele, kleine Gruppen aufteilen und erforderlichenfalls auch die einzelnen Elektroden nacheinander jeweils allein mit dem Schweissstrom speisen. Die Anzahl der gleichzeitig mit dem Schweissstrom gespeisten Elektroden ist aber in der Regel weniger durch die Belastbarkeit des Netzes als aus thermischen Gründen beschränkt. Diese Anzahl sowie die Aufteilung der Elektroden auf die einzelnen, nicht notwendigerweise gleiche Elektrodenanzahl aufweisenden Gruppen und schliesslich die Reihenfolge, in welcher die Elektrodengruppen mit dem - gegebenenfalls programmgesteuerten - Schweissstrom gespeist werden, wird zweckmässig nämlich so gewählt, dass die Werkstücke möglichst wenig und gleichmässig erwärmt werden, damit Spannungen in diesen vermieden werden. Verformungen der Werkstücke werden zuverlässig dadurch verhindert, dass die Werkstücke während des gesamten Schweissvorgangs, d.h. von der ersten bis zur letzten Schweissung, (und zweckmässig danach noch während einer bestimmten Abkühlzeit), zwischen sämtlichen Elektroden und Gegenelektroden eingespannt sind.

Wie oben beschrieben, werden die jeweils mit dem Schweissstrom zu speisenden Elektrodengruppen galvanisch mit der Platte 5 verbunden, bevor der Schweissstrom mittels der Schaltvorrichtung 15 eingeschaltet wird. Entsprechend werden die Elektroden erst nach dem Ausschalten des Schweissstroms wieder galvanisch von der Platte 5 und damit voneinander getrennt. Durch das stromlose Schalten der Trennschalter 30 werden Funkenerosionen an den Kontaktflächen 36, 37 vermieden. Die Ausbildung der Kontaktfläche 37 am obersten Blatt des Strombandendes 40 gewährleistet zusammen mit der grossen Kraft der hydraulischen Einheit 42, 45, 46, dass der Kontaktwiderstand über die ganze Kontaktfläche gleich niedrig ist: Wegen der Biegsamkeit der das Stromband bildenden Metallblätter wird nämlich das oberste Blatt durch die vom Zwischenstück 48 übertragene Kraft des Kolbens 45, 46 ganzflächig dicht an die starre Kontaktfläche 36 des Schenkels 38 gepresst, was bei zwei starren Kontaktflächen nur bei genauester Parallelität gewährleistet wäre.

Der Schweisstrom könnte auch Wechselstrom sein. Der Gleichstrom hat aber gegenüber Wechselstrom den Vorteil, dass er sich infolge des Wegfalls des Skineffekts nicht nur in den Elektroden sondern auch in den Werkstücken gleichmässiger verteilt und gebündelt bleibt.

Anstelle der den Elektroden 6 bis 9 einzeln zugeordneten Gegenelektroden 11 kam an sich auch eine einzige als Kraftübertragungsplatte 10 ausgebildete Gegenelektrode vorgesehen sein.

Der Schalter für den Schweissstrom kann ferner in den Sekundärkreis der Transformatorengruppe 14 geschaltet sein. Grundsätzlich könnten die Schalter 30 auch Leistungsschalter sein, die den Schweissstrom schalten.

Weiter kann die Kolben-Zylinder-Einheit 3 auch an der Platte 10 statt an der Platte 5 angreifen, wobei diese starr am Maschinengestell gehalten sein kann. Es können auch zwei Kolben-Zylinder-Einheiten für die beiden Kraftübertragungsplatten 5 und 10 vorgesehen sein, deren eine die eine Platte in eine durch einen Anschlag bestimmte Lage zustellt und deren andere beaufschlagt wird, bis die erforderliche Schweisskraft erzeugt ist. Ferner könnten die Gegenelektroden 11 - anstelle oder ebenso wie die Elektroden 6 - federnd (mittels entsprechenden Druckfedern 32) an der Platte 10 abgestützt sein.

Die Kontaktfläche 36 kann auch unmittelbar an der Unterseite der Platte 5, die Kontaktfläche 37 z.B. an einer auf dem Strombandende 40 angebrachten Kontaktfeder gebildet sein.

Das andere Ende 43 des Strombands 41 kann schliesslich auch unmittelbar am Elektrodenhalter 20 befestigt sein.

Schliesslich können auch die einzelnen Elektroden einer Gruppe leitend miteinander verbunden und durch ein einziges, der ganzen Gruppe zugeordnetes Schaltorgan gemeinsam mit der Platte 5 verbindbar sein. Die dargestellte Ausführungsform, bei der jeder Elektrode ein eigenes Schaltorgan 30 zugeordnet ist, hat aber den Vorteil, dass die einzelnen Schaltorgane weniger strombelastet sind und die Gruppeneinteilung ohne weiteres, lediglich durch entsprechend andere hydraulische Beaufschlagung der Kolben 45 geändert werden kann.

Im beschriebenen Beispiel sind sämtliche Elektroden an einer gemeinsamen Kraftübertragungsplatte angebracht. Die Elektroden können aber auch gruppenweise an mehreren Kraftübertragungsplatten angebracht sein, für die je ein Krafterzeugungsmittel vorgesehen ist. Die Kraftübertragungsplatten wären dann elektrisch miteinander bzw. gemeinsam mit dem Gleichrichter 12 zu verbinden. Der Vorteil dieser Ausführungsform besteht darin, dass die Schweisskräfte von Elektrodengruppe zu Elektrodengruppe - durch entsprechende Einstellung der einzelnen Karfterzeugungsmittel - verschieden gewählt werden können.

RK/ms-6391
31.10.1980

Patentansprüche

1. Verfahren zum Mehrstellen-Widerstandsschweissen mittels einer Vielzahl von Elektroden und wenigstens einer Gegenelektrode, dadurch gekennzeichnet, dass die zu verschweissenden Werkstücke (55, 56) zwischen sämtliche Elektroden (6, 7, 8, 9) und Gegenelektroden (11) eingespannt und darauf die einzelnen Elektroden oder vorgewählte Gruppen (6, 7, 8, 9) der Elektroden nacheinander in denselben Schweissstromkreis (12, 13) geschaltet werden.

2. Verfahren nach Anspruch 1, dadurch gekennzeichnet, dass die jeweils mit dem Schweissstrom zu speisende Elektrode bzw. Elektrodengruppe (6, 7, 8, 9) in den Schweissstromkreis (12, 13) geschaltet wird, bevor der Schweissstrom eingeschaltet wird, und erst nach dem Ausschalten des Schweissstroms wieder vom Schweissstromkreis getrennt wird.

3. Verfahren nach Anspruch 1 oder 2, dadurch gekennzeichnet, dass mit Gleichstrom geschweisst wird.

4. Vorrichtung zur Durchführung des Verfahrens nach Anspruch 1, mit einer Vielzahl von Elektroden und wenigstens einer Gegenelektrode, dadurch gekennzeichnet, dass sämtliche Elektroden (6, 7, 8, 9) elektrisch isoliert (28) an wenigstens einer elektrisch leitenden Kraftübertragungsplatte (5) angebracht sind, welche an den einen Pol einer schaltbaren Schweissstromquelle (14, 15) angeschlossen ist und die von Krafterzeugungsmitteln (3) für die gleichzeitige Beaufschlagung sämtlicher Elektroden (6,7,8,9) bzw. Gegenelektroden (11) erzeugte Kraft überträgt, und dass jeder Elektrode (6, 7, 8, 9) oder jeder Elektrodengruppe ein Schalter (30) zugeordnet ist, durch den sie galvanisch mit der Kraftübertragungsplatte (5) verbindbar ist.

5. Vorrichtung nach Anspruch 4, dadurch gekennzeichnet, dass jeder Elektrode (6, 7, 8, 9) ein Schalter (30) zugeordnet ist, so dass sowohl die einzelnen Elektroden wie auch, durch gleichzeitige Betätigung mehrerer Schalter (30), vorgewählte Gruppen der Elektroden (6, 7, 8, 9) nacheinander mit der Kraftübertragungsplatte (5) verbindbar sind.

6. Vorrichtung nach Anspruch 5, dadurch gekennzeichnet, dass in den durch die Schalter (30) schliessbaren Verbindungs-wegen zwischen den Elektroden (6, 7, 8, 9) und der Kraftübertragungsplatte (5) Widerstände (59) vorgesehen sind, damit, wenn vorgewählte Gruppen der Elektroden (6, 7, 8, 9) nacheinander in denselben Schweissstromkreis (12,13) geschaltet werden, je nach den gewählten Widerständen verschiedene Stromstärken durch die einzelnen, jeweils parallel zuei-nander in den Schweissstromkreis geschalteten Elektroden einer Elektrodengruppe fliessen.

7. Vorrichtung nach einem der Ansprüche 4 bis 6, dadurch gekennzeichnet, dass jeder Schalter (30) zwei in der Einschaltstellung flächig aneinander anliegende und in der Ausschaltstellung durch einen Luftspalt getrennte Kontaktteile (36, 38; 37, 40) aufweist.

8. Vorrichtung nach Anspruch 7, dadurch gekennzeichnet, dass eine Schutzhülle oder ein Schutzring (58) die Kontaktflächen (36, 37) der Kontaktteile (38, 40) vor Staub und Schweissspritzern schützt.

9. Vorrichtung nach einem der Ansprüche 4 bis 8, dadurch gekennzeichnet, dass die Schalter (30) durch je eine hydraulisch oder pneumatisch beaufschlagbare Kolben-Zylinder-Einheit (42, 45, 46) betätigbar sind.

10. Vorrichtung nach den Ansprüchen 7 und 9, dadurch gekennzeichnet, dass der eine Kontaktteil (36, 38) an der Kraftübertragungsplatte (5) ausgebildet oder befestigt ist, und der andere Kontaktteil (37) an einem mittels der Kolben-Zylinder-Einheit (42, 45) parallel zur Kontaktfläche (36) des einen Kontaktteils (38) verschiebbaren Ende (40) eines biegsamen Leiters (41) ausgebildet oder befestigt ist, dessen anderes Ende (43) fest und leitend mit dem Elektrodenhalter oder einem mit diesem (20) verbundenen Verbindungsteil (22) verbunden ist.

11. Vorrichtung nach Anspruch 10, dadurch gekennzeichnet, dass der eine Kontaktteil (36, 38) durch einen an der Kraftübertragungsplatte (5) befestigten Schenkel (38) eines das eine Ende (40) des biegsamen Leiters (41) umgreifenden, U-förmigen Halters (39) gebildet ist, dessen anderer Schenkel (42) den Zylinder der Kolben-Zylinder-Einheit (42, 45) bildet oder trägt, und deren Kolben (45, 46) isoliert (47) am einen Ende (40) des biegsamen Leiters (41) angreift und durch dieses hindurch an eine in dem einen Schenkel (38) gelagerte Druckfeder (49) geführt ist, gegen deren Kraft der Kolben (45, 46) hydraulisch oder pneumatisch beaufschlagbar ist.

12. Vorrichtung nach einem der Ansprüche 4 bis 11, dadurch gekennzeichnet, dass jede Elektrode (6, 7, 8, 9) mit einem Führungsteil (27) verbunden ist, welcher in einer senkrecht an der Kraftübertragungsplatte (5) vorstehenden Führung (31) gegen die Kraft einer Druckfeder (32) einstellbarer (33) Federspannung in Richtung auf die Kraftübertragungsplatte (5) verschiebbar ist.

13. Vorrichtung nach einem der Ansprüche 4 bis 12, dadurch gekennzeichnet, dass sowohl die Elektrodenhalter (20) und/ oder die Elektroden (6) als auch die Schalter (30) mit Kühlkanälen (19, 54) versehen sind.

14. Vorrichtung nach einem der Ansprüche 4 bis 13, dadurch gekennzeichnet, dass die Kraftübertragungsplatte (5) an den einen Pol eines in den Sekundärkreis eines Transformators oder einer Transformatorengruppe (14) geschalteten Hochstrom- gleichrichters (12) angeschlossen ist.

15. Vorrichtung nach einem der Ansprüche 4 bis 14, dadurch gekennzeichnet, dass jeder Elektrode (6, 7, 8, 9) eine Gegenelektrode (11) zugeordnet ist und sämtliche Gegenelektroden (11) leitend mit einer zweiten, zur ersten Kraftübertragungsplatte (5) parallelen Kraftübertragungsplatte (10) verbunden sind, die an den anderen Pol der Schweissstromquelle (14, 15) bzw. des Hochstromgleichrichters (12) angeschlossen ist.

16. Vorrichtung nach einem der Ansprüche 4 bis 15, dadurch ge- kennzeichnet, dass sämtliche Elektroden (6,7,8,9) an einer gemeinsamen Kraftübertragungsplatte (5) angebracht sind.

17. Vorrichtung nach einem der Ansprüche 4 bis 15, dadurch gekennzeichnet, dass die Elektroden an mehreren, elektrisch leitenden Kraftübertragungsplatten angebracht sind, welche gemeinsam an den einen Pol der schaltbaren Schweissstromquelle angeschlossen sind, und jeder Kraftübertragungsplatte ein Krafterzeugungsmittel zugeordnet ist.

RK/ms-6391
31.10.1980

Fig. 1

Fig. 6

0051135

0051135

Fig. 5

Fig. 2

Fig. 3

Fig. 4

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 215 957 (DAIMLER-BENZ) <br> &ast; Insgesamt &ast; | 1,4,5, 7-9,13 | B 23 K 11/36 <br> H 01 M 33/00 |
| | -- | | |
| | FR - A - 2 289 288 (E.V.G. ENT-WICKLUNGS- UND VERWERTUNGSGESELL-SCHAFT) <br> &ast; Seiten 7,8 &ast; <br> & DE - A - 2 543 623 | 1,4 | |
| | -- | | |
| | FR - A - 1 323 671 (L'ALUMINIUM FRANCAIS) <br> &ast; Seite 3, linke Spalte, Absatz 6 - rechte Spalte, Absatz 2; Abbildungen 4,5 &ast; | 1,4 | RECHERCHIERTE SACHGEBIETE (Int. Cl.³) <br><br> B 23 K 11/36 <br> H 01 H 33/00 |
| | -- | | |
| A | FR - A - 1 381 722 (FIAT) <br> &ast; Seite 2, Zusammenfassung &ast; | 1,4 | |
| | -- | | |
| | FR - A - 788 854 (A.E.G.) <br> &ast; Zusammenfassung &ast; | 2,5 | |
| | -- | | KATEGORIE DER GENANNTEN DOKUMENTE |
| A | US - A - 3 521 026 (BENETEAV) <br> &ast; Zusammenfassung &ast; | 1,4 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsatze |
| | -- | | |
| | US - A - 2 979 599 (AIR REDUCTION) <br> &ast; Figuren 2,5; Spalte 2, Zeilen 28-44 &ast; | 1,4, 12,16, 17 | E: kollidierende Anmeldung <br> D: in der Anmeldung angefuhrtes Dokument <br> L: aus andern Grunden angefuhrtes Dokument |
| | ---- | | &: Mitglied der gleichen Patent-familie, ubereinstimmendes Dokument |

| Der vorliegende Recherchenbericht wurde fur alle Patentanspruche erstellt. | | |
|---|---|---|
| Recherchenort <br> Den Haag | Abschlußdatum der Recherche <br> 18-12-1981 | Prufer <br> HOORNAERT |

EPA form 1503.1  06.78